Europäisches Patentamt

European Patent Office

Office européen des brevets

(11) Numéro de publication : **0 292 464 B1**

(12) **FASCICULE DE BREVET EUROPEEN**

(45) Date de publication du fascicule du brevet :
05.08.92 Bulletin 92/32

(51) Int. Cl.⁵ : **E21B 17/042, F16L 15/00**

(21) Numéro de dépôt : **88870086.1**

(22) Date de dépôt : **11.05.88**

(54) **Jointure filetée pour éléments de tige de forage.**

(30) Priorité : **12.05.87 BE 8700512**
**12.05.87 BE 8700513**

(43) Date de publication de la demande :
**23.11.88 Bulletin 88/47**

(45) Mention de la délivrance du brevet :
**05.08.92 Bulletin 92/32**

(84) Etats contractants désignés :
**DE FR GB IT NL**

(56) Documents cités :
**EP-A- 0 153 224**
**GB-A- 2 087 022**
**GB-A- 2 119 044**

(56) Documents cités :
**US-A- 3 355 192**
**WORLD OIL, no. 5, octobre 1984, page 57, Gulf**
**Publishing Co., Houston, Texas, US;**
**"High-torque DP connection"**

(73) Titulaire : **DIAMANT BOART STRATABIT S.A.**
**Avenue du Pont de Luttre, 74**
**B-1190 Bruxelles (BE)**

(72) Inventeur : **Hallez, Charles Pierre**
**183c, rue Saint Joseph**
**B-6394 Tellin (BE)**

(74) Mandataire : **Vanderperre, Robert et al**
**Bureau Vander Haeghen S.A. Rue Colonel**
**Bourg 108 A**
**B-1040 Bruxelles (BE)**

EP 0 292 464 B1

Jouve, 18, rue Saint-Denis, 75001 PARIS

## Description

La présente invention est relative à une jointure filetée pour l'emmanchage par vissage en bout d'éléments de tige de forage dont l'un est muni à au moins une extrémité d'un filetage hélicoïdal conique mâle présentant un angle d'ouverture du cône compris entre 1 et 3°, un filet trapézoïdal ou rond de pas constant déterminant une inclinaison de l'hélice décroissante et dont l'autre est muni d'un filetage hélicoïdal conique femelle correspondant, ce filetage présentant une double butée de vissage, un stand-off et un rapport entre l'angle d'ouverture du cône et l'angle d'inclinaison de l'hélice à l'entrée du filetage supérieur à 0,3 et inférieur à 2.

Il est indispensable que la résistance d'un filetage de forage corresponde au moins aux sollicitations statiques et dynamiques du train de tiges dans le trou à forer et aux efforts supplémentaires exigés lors des manoeuvres.

Ainsi, la connaissance du coefficient de sécurité permet, lors du sauvetage du train de tiges, d'exploiter le filet jusqu'à sa limite ultime sans incident.

Les forages actuels peuvent atteindre une profondeur de 14 000 m.

La présente invention propose un filetage qui répond mieux aux exigences susdites en présentant notamment de meilleures performances en couple, poussée et traction et fatigue en sollicitations simples ou combinées.

L'apparition dans les machines de forage d'outils de coupe nouveaux, tels que les plaquettes diamantées ou les éléments de coupe diamantées polycristallins a entraîné l'utilisation de tables de rotation plus puissantes, capables de transmettre des couples plus élevés, à la fois, en grandeur et vitesses de rotation, et ce parfois malgré des déviations importantes imposées par les forages dirigés.

Ces exigences nouvelles imposent aux tiges de forages et en particulier aux jonctions filetées, des sollicitations extrêmement sévères, tant au niveau des contraintes de cisaillement, torsion, traction, flexion et compression que des phénomènes de fatigue du corps de filetage.

Comme décrit dans la demande de brevet européen N° 0153224, on utilise couramment dans les forages pétroliers, des éléments de tige pourvus de filetage tronconiques comportant au moins une butée de limitation de vissage contre laquelle vient prendre appui lors du serrage l'extrémité d'un élément mâle.

La distance observée entre la butée de limitation de vissage extérieure mâle et la butée de limitation de vissage extérieure femelle, après serrage manuel du filet mâle constitue le stand-off. L'extrémité du filet est éventuellement munie d'une gorge de décharge destinée à défléchir les lignes de forces.

Cette distance est dimensionnée de telle manière qu'un surcouple de serrage procure un assemblage rigide sans provoquer de déformation permanente ni dans l'embout mâle ni dans l'élément femelle.

Un filetage de faible conicité permet un grand stand-off en relation avec l'angle de cône.

Les filetages tronconiques de l'élément mâle et de l'élément femelle présentant un stand-off sont par nature frettants. En les vissant l'un dans l'autre, il s'exerce des efforts radiaux au niveau du filetage qui tendent à réduire le diamètre du filetage de l'élément mâle et accroître le diamètre du filetage de l'élément femelle. Différents facteurs influencent le couple de torsion qu'il est nécessaire d'appliquer aux tiges pour amener en contact les butées de limitation de vissage, par exemple les tolérances d'usinage, les caractéristiques mécaniques de la graisse et la longueur des stand-offs.

Par le document GB-A-2119044, on connaît une jointure filetée pour l'emmanchage par vissage en bout d'éléments de tige de forage. Un premier élément est muni, à une extrémité d'un filetage hélicoïdal conique mâle présentant un angle d'ouverture du cône compris entre 1 et 3° et un filet de pas constant. Un second élément est muni d'un filetage hélicoïdal conique femelle correspondant. Les deux filetages mâle et femelle présentent une double butée de vissage, un stand-off et un rapport entre l'angle d'ouverture du cône et l'angle d'inclinaison de l'hélice à l'entrée du filetage supérieur à 0,3 et inférieur à 2.

Un tel filetage ne présente qu'une zone morte non filetée, comprise entre la butée et le dernier filet du filetage à l'extrémité de l'embout mâle.

L'absence de zone morte non filetée comprise entre la butée et le dernier filet du filetage dans la zone d'introduction de l'embout femelle ainsi que l'absence d'inclinaison des butées ne permet pas de prévenir la formation d'un renflement de la zone d'introduction lors du serrage de la jointure filetée.

Le couple de serrage recommandé est celui qui permet d'amener les butées de limitation de vissage l'une contre l'autre avec une pression souhaitée.

Ces filetages connus, de même que tous les filetages normalisés utilisés à ce jour en forage pour transmettre un couple, respectent simplement les concepts donnés par l'A.P.I., l'American Petroleum Institute.

Divers types sont très connus des foreurs pétroliers, en particulier le type REGULAR, FULL HOLE et INTERNAL FLUSH qui comptent environ 4 à 6 filets par pouce (T.P.I). Ils résistent à de grands efforts de traction et présentent une butée simple et un angle d'ouverture de cône d'environ 8 à 15° et un pas relativement faible, choisi de telle manière que le rapport de l'angle d'ouverture du cône sur l'angle moyen d'inclinaison de l'hélice soit comprise entre 8/1 et 18/1. Ces filetages normalisés API ont pour inconvénient de concentrer les efforts de transmission du couple sur un tronçon de matière dont la longueur n'excède pas deux pas.

Notons qu'il existe en forages pétroliers et miniers, également d'autres filetages, notamment ceux employés dans les carottiers. Ceux-ci respectent la recommandation de l'API d'avoir la conicité la plus grande possible compatible avec l'épaisseur de tige et de présenter un pas relativement petit. Pour sauvegarder cette recommandation de l'API, les constructeurs ont choisi des pas compris entre 6 et 8 TPI.

Les filets normalisés par l'API ainsi que les filets par carottiers ont la caractéristique importante d'être interchangeables entre eux. Tant que le critère commercial d'interchangeabilité prévaut, la seule façon d'augmenter les performances en résistance vis-à-vis d'un couple d'un filet standard est de choisir un acier possédant une meilleure résistance c'est-à-dire une limite élastique et une limite à la rupture plus élevée. Mais ce choix n'apporte qu'une amélioration négligeable et entraîne comme corollaire une diminution de l'allongement et donc une tenue à la fatigue nettement réduite, c'est-à-dire en d'autres mots, la tige accepte des déviations plus faibles et aura une durée de vie plus courte.

La plupart des destructions constatées dans les trains de tiges mettant en oeuvre des filetages API sous les conditions sévères d'utilisation selon les nouvelles techniques de forage, sont localisées au voisinage immédiat des butées de limitation de vissage et se présentent sous l'une des formes suivantes :

1. renflement de la zone d'alésage de l'élément femelle au voisinage de la butée extérieure et renforcement annulaire simultané de l'embase mâle par fluage;

2. brisure nette du type fragile du corps de l'embout mâle au niveau de la dernière spire ou de la zone d'alésage adjacente à cette spire et à la butée extérieure;

3. brisure nette de la douille de l'élément femelle au niveau de la spire d'entrée du filetage ou de la portion du tube alésée adjacente à la butée extérieure;

4. brisure nette de l'embout mâle au niveau de l'entrée du filetage;

5. brisure nette de l'élément femelle au niveau de la zone alésée au fond du filetage;

6. déformation des fonds de filet provoqué par des tensions excessives ou par fatigue.

La présente invention vise à remédier aux inconvénients susdits. Dans ce but elle propose une jointure filetée conique de type décrit dans le premier paragraphe du présent mémoire. Cette jointure est caractérisée en ce que la double butée de vissage est tronconique et en ce que des gorges de décharge sont prévues dans les zones mortes non filetées.

Cette jointure filetée conique jouit de performances inattendues. Le gain de résistance à la torsion résulte de la présence d'une double zone morte c'est-à-dire, une à chaque extrémité du filetage et de la conicité des butées qui prévient le renflement de l'élément femelle sous l'effet du serrage.

Selon une particularité de l'invention, la zone morte non filetée comprise entre la butée et le dernier filet dudit filetage, au moins égale à une distance de deux pas.

De même la zone d'introduction, non filetée, comprise entre la butée et le premier filet du filetage, est elle aussi égale à une distance de deux pas.

On veille à ce que la tangente de l'hélice soit inférieure au coefficient de friction de 0,08 généralement avancé par l'American Petroleum Institute API pour assurer l'indesserrabilité des pièces et augmenter la valeur admissible du couple de serrage du joint.

L'invention repose sur le fait que lorsqu'on augmente l'inclinaison de filetage, on augmente également la contribution du filetage dans la transmission d'un couple de torsion, puisqu'on sollicite moins les butées.

En augmentant l'inclinaison d'un filetage, on fait travailler un plus grand volume de matière pour un profil donné du filetage.

Les profils des filets intérieur et extérieur comprennent une crête et un fond de filet qui induisent un effet frettant lors du vissage et des flancs inclinés d'un angle choisi de manière à reprendre le couple de serrage et induire sur toute la longueur du filetage, une précontrainte de pression qui prévient les phénomènes de fatigue.

Ces particularités et détails de l'invention, ainsi que d'autres, apparaîtront au cours de la description détaillée suivante faisant référence au dessin suivant, qui illustre une forme de réalisation particulière et prise à titre d'exemple non limitatif, de l'invention.

Dans ces dossiers :

La figure 1 est une coupe longitudinale partielle d'un élément de tige de forage muni d'un filetage tronconique selon l'invention, à une seule entrée et

La figure 2 illustre une seconde forme de réalisation d'un filetage selon l'invention.

En s'éloignant de la théorie donnée par l'API et en suivant une logique plus proche des exigences du forage d'aujourd'hui, on a créé dans une même épaisseur de tige 1, un filet 2 présentant un couple de torsion nettement supérieur et une résistance à la fatigue également supérieure tout en maintenant les autres propriétés (pull capacity, étanchéité, etc...) au moins égales à leur niveau actuel.

Les filetages selon l'invention peuvent être des filetages de profil quelconque, par exemple, trapézoïdal ou rond. Ces filetages trapézoïdaux assurent un meilleur centrage par l'inclinaison des flancs.

La combinaison d'un angle d'ouverture a faible et d'un grand pas p par rapport au diamètre D de la tige 2 procure au filetage des performances inattendues, remarquables par rapport au poids des tiges.

$p/D = t9 \beta$

$\beta = 1$ à $3°$

Elle rend possible le vissage en bout des éléments de tiges au couple de serrage recommandé en deux ou trois tours seulement.

Elle permet également de ménager des butées 3 présentant une surface portante suffisante que pour reprendre les efforts de pression importants. Une conicité faible permet de mieux maîtriser les pressions dues à l'effet frettant du stand-off qui prend appui sur les flancs des profils des filets.

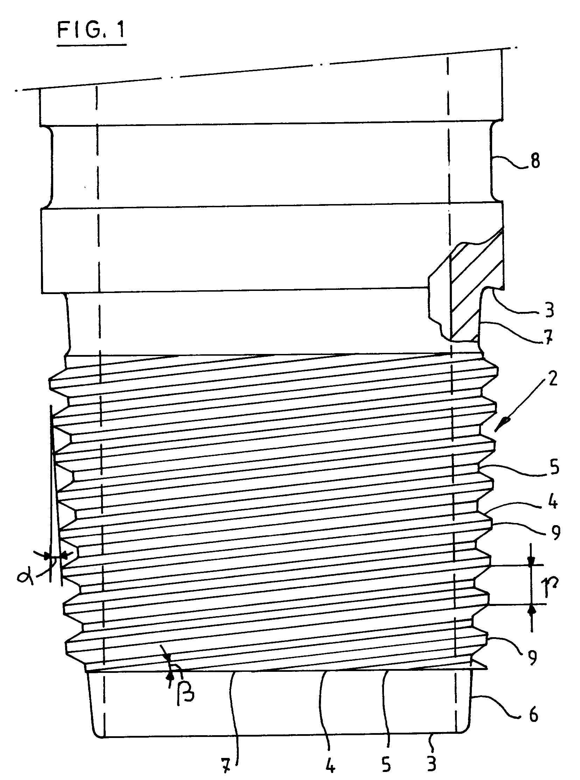

Un choix judicieux du profil qui comprend des flancs 4, un fond de filet 5 et une crête 9, comme illustré dans la figure 1, permet aux filets de s'appuyer davantage sur les flancs 4 et pour certaines applications sur le fond 5 des filets. En effet, on induit sur la face supérieure du profil, lors du vissage, un effet frettant tandis qu'on engendre des effets de pression sur les butées par les flancs du profil. Les flancs 4 en opposition avec les butées contribuent ainsi à transmettre le couple de serrage. Ce couple de serrage induit sur toute la longueur du filetage une précontrainte de pression qui prévient les phénomènes de fatigue dus aux flexions répétées des tiges.

On comprend aisément qu'un grand pas permet de moins solliciter les butées 3 pour un même couple.

La combinaison d'un angle d'ouverture $\alpha$ faible et d'un grand pas permet d'atteindre les performances plus sévères que les forages actuels exigent.

En outre, le fait de choisir une double butée 3 usinée de part et d'autre du filetage dans les limites de la précision d'usinage assurée par les machines outils actuelles et d'élasticité du filet, a pour but de doubler la surface des butées de limitation de vissage en vue de pouvoir augmenter en premier lieu les performances mécaniques de train de tiges, en particulier le couple de torsion transmis par le train de tiges et non pas d'augmenter l'étanchéité dudit train de tiges.

Grâce à la combinaison susdite d'un angle d'ouverture $\alpha$ de l'ordre de 1 à 3° et d'une inclinaison de l'hélice de l'ordre de 1 à 3° à l'entrée du filetage, on permet d'augmenter la valeur de la résistance en couple de torsion par un emploi plus judicieux de la matière disponible au filet et en répartissant les efforts sur un plus grand volume de matière. On augmente ainsi les performances de nouveau filetage selon l'invention, par rapport aux filetages connus, dans une proportion pouvant atteindre 270 %, comme illustré par l'exemple comparatif suivant.

A titre d'exemple nous donnons le tableau comparatif pour un filet 6 3/4 nouveau.

| | FILET NORMALISE | NOUVEAU FILET | FACTEUR COMPARATIF |
|---|---|---|---|
| | | 1 seule entrée | |
| Couple de serrage re-commandé | 1300 kg.m. | 3490 kg.m. | soit 270 % du normalisé |
| Couple de rupture | 3055 kg.m. | 8200 kg.m. | 270 % du normalisé |
| Maximum Pull | 125 T | 193 T | 154 % du normalisé |

Ce tableau permet d'évaluer les nouvelles performances. Les mesures sont le résultat d'investigations permettant de comparer l'étude et les essais (analyses par éléments finis, jauges de contraintes et de déformations...). Les mesures les plus précises et les plus performantes ont été effectuées sur un banc d'essai en couple.

Le fait de choisir une zone d'introduction non filetée 6 de longueur d'au moins deux pas entre le premier filet et la butée permet d'augmenter la quantité d'acier travaillant à un haut niveau de sollicitations impliquant des problèmes dynamiques sévères et des blocages intempestifs importants.

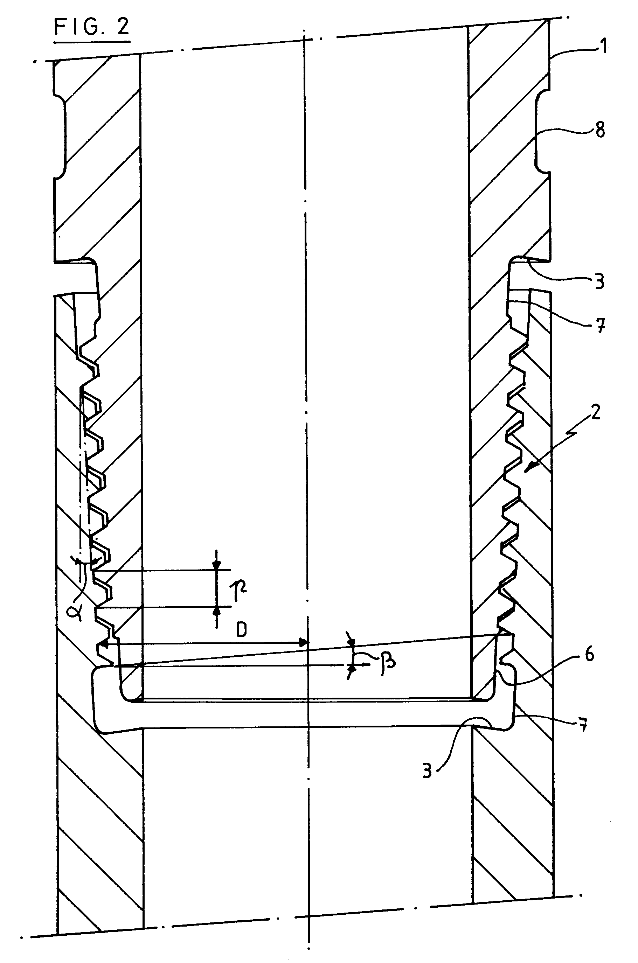

Quant aux gorges de décharges 8 prévues dans la zone d'introduction 6 et la zone morte 7 non filetées et dans les tiges au voisinage des raccords, et illustrées aux figures 1 et 2 unique, elles permettent de filtrer les sollicitations de fatigue et de protéger le filet lorsqu'elles sont judicieusement dimensionnées.

## Revendications

1. Jointure filetée pour l'emmanchage par vissage en bout d'éléments de tige de forage (1) dont l'un est muni à au moins une extrémité d'un filetage hélicoïdal conique mâle présentant un angle d'ouverture ($\alpha$) du cône compris entre 1 et 3°, un filet (2) trapézoîdal ou rond de pas (p) constant déterminant une inclinaison ($\beta$) de l'hélice décroissante et dont l'autre est muni d'un filetage hélicoïdal conique femelle correspondant, ce filetage présentant une double butée de vissage (3), un stand-off et un rapport entre l'angle d'ouverture ($\alpha$) du cône et l'angle d'inclinaison ($\beta$) de l'hélice à l'entrée du filetage supérieur à 0,3 et inférieure à 2, caractérisé en ce que le filet présente une double butée de vissage tronconique (3) et enfin des gorges de décharge (8) dans les zones mortes (7) non filetées et dans les tiges (1) de la jointure d'emmanchage.

2. Jointure filetée selon la revendication 1, caractérisée en ce que chaque tige de forage présente une zone morte (7) non filetée comprise entre la butée (3) et le dernier filet dudit filetage, au moins égale à une distance de deux pas (p).

3. Jointure filetée selon la revendication 1, caractérisée en ce que chaque tige de forage présente une zone d'introduction (6) non filetée comprise entre la butée (3) et le premier filet dudit filetage, au moins égale à une distance de deux pas (p).

4. Jointure filetée selon la revendication 3, caractérisée en ce qu'un jeu entre le filetage mâle et le filetage femelle autorise l'introduction de l'extrémité du filetage mâle en butée contre le premier fil-et du filetage femelle.

5. Jointure filetée selon l'une quelconque des revendications précédentes, caractérisée en ce que les profils des filets intérieur et extérieur comprennent une crête (9) et un fond de filet (5) qui induisent un effet frettant lors du vissage et des flancs inclinés (4) d'un angle choisi de manière à reprendre le couple de serrage et induire sur toute la longueur du filetage une précontrainte de pression qui prévient les phénomènes de fatigue.

6. Jointure filetée selon la revendication 1, caractérisée en ce que la tangente de l'inclinaison ($\beta$) de l'hélice à l'entrée du filetage est inférieure au coefficient de friction 0,08.

## Claims

1. Threaded connector for coupling ends of drilling pipes (1) by screwing, in which one part is provided at at least one end with a male helical conical screw thread having an angle of taper ($\alpha$) of the cone between 1 and 3°, a trapezoidal or round thread (2) of constant pitch (p) defining a tapering helix of inclination ($\beta$), and in which the other part is provided with a corresponding female helical conical thread, this thread having a double screw stop (3), a stand-off and a ratio between the angle of taper ($\alpha$) of the core and the angle of inclination of the helix ($\beta$) at the beginning of the screw thread greater than 0.3 and less than 2, characterised in that the thread has a double screw stop in the form of a truncated cone (3) and also relief grooves (8) in the unthreaded dead zones (7) and in the pipes (1) of the coupling joint.

2. Threaded connector according to claim 1, characterised in that each drilling pipe has an unthreaded dead zone (7) between the stop (3) and the last turn of the said screw thread, for a distance of at least twice the pitch (p).

3. Threaded connector according to claim 1, characterised in that each drilling pipe has an unthreaded introduction zone (6) between the stop (3) and the first turn of the said screw thread, for a distance of at least twice the pitch (p).

4. Threaded connector according to claim 3, characterised in that a clearance between the male screw thread and the female screw thread permits the introduction of the end of the male screw thread so as to abut against the first turn of the female screw thread.

5. Threaded connector according to any preceding claim, characterised in that the profiles of the interior and exterior threads have a crest (9) and a bottom (5) which cause a binding effect during screwing and flanks (4) inclined at an angle chosen to transmit the torque load and to introduce a binding prestress along the whole length of the screw thread which prevents fatigue phenomena.

6. Threaded connector according to claim 1, characterised in that the tangent of the inclination ($\beta$) of the helix at the beginning of the screw thread is less than a coefficient of friction of 0.08.

**Patentansprüche**

1. Schraubverbindung zum Aufstecken durch Schrauben am Ende von Elementen eines Bohrgestänges (1), wobei das eine an wenigstens einem Ende mit einem paternellem, konischen, spiralförmigen Gewinde versehen ist, das einen Öffnungswinkel ($\alpha$) des Kegels zwischen 1 und 3° aufweist, wobei ein trapezförmiger oder runder Gewindegang (2) mit einer konstanten Ganghöhe (p) einen Neigungswinkel ($\beta$) der abnehmenden Schraubenlinie bestimmt und, wobei das andere mit einem entsprechenden maternellen, konischen, spiralförmigen Gewinde versehen ist, wobei dieses Gewinde einen doppelten Verschraubungsanschlag (3), einen Stand-off und ein Verhältnis zwischen dem Öffnungswinkel ($\alpha$) des Kegels und dem Neigungswinkel ($\beta$) der Schraubenlinie am Eingang des Gewindes größer als 0,3 und kleiner als 2 aufweist, dadurch gekennzeichnet, daß der Gewindegang einen doppelten, kegelstumpfartigen Verschraubungsanschlag (3) und schließlich Entlastungsvertiefungen (8) in den nicht mit Gewinde versehenen, toten Zonen (7) und in den Gestängen (1) der Aufsteckverbindung aufweist.

2. Schraubverbindung nach Anspruch 1, dadurch gekennzeichnet, daß jedes Bohrgestänge eine nicht mit Gewinde versehene, tote Zone (7) zwischen dem Anschlag (3) und dem letzten Schraubengang des Gewindes aufweist, die wenigstens gleich einem Abstand von zwei Ganghöhen (p) ist.

3. Schraubverbindung nach Anspruch 1, dadurch gekennzeichnet, daß jedes Bohrgestänge eine nicht mit Gewinde versehene Einführungszone (6) zwischen dem Anschlag (3) und dem ersten Schraubengang des Gewindes aufweist, die wenigstens gleich einem bestand von zwei Ganghöhen (p) ist.

4. Schraubverbindung nach Anspruch 3, dadurch gekennzeichnet, daß ein Spielraum zwischen dem paternellen Gewinde und dem maternellen Gewinde das Einführen des paternellen Gewindeendes im Anschlag gegen den ersten Schraubengang des maternellen Gewindes ermöglicht.

5. Schraubverbindung nach einem der vorhergehenden Ansprüche, dadurch gekennzeichnet, daß die Profile der inneren und äußeren Schraubengänge eine Spitze (9) und einen Schraubengangboden (5) umfassen, die einen Versteifungseffekt beim Verschrauben bewirken, und geneigte Seiten (4) mit einem Winkel, der so gewählt ist, daß das Anziehdrehmoment wiedererlangt und auf die ganze Länge des Gewindes eine Druckvorspannung bewirkt wird, die Ermüdungserscheinungen verhindert.

6. Schraubverbindung nach Anspruch 1, dadurch gekennzeichnet, daß der Tangens des Neigungswinkels ($\beta$) der Schraubenlinie am Eingang des Gewindes kleiner als der Reibungskoeffizient 0,08 ist.

FIG. 1

# FIG. 2